# EUROPÄISCHE PATENTANMELDUNG

(11) **EP 3 018 310 A1**
(43) Veröffentlichungstag der Anmeldung: **11.05.2016**
(21) Anmeldenummer: 15002451.1
(22) Anmeldetag: 24.04.2013
(51) Int. Cl.: F01N 3/00, F01N 11/00, F01N 13/16, G01K 7/36, G01K 11/12, G01N 27/00, G01N 27/82, G01R 33/00

(54) **ABGASNACHBEHANDLUNGSSYSTEM FÜR BRENNKRAFTMASCHINEN**

(30) Priorität: 04.07.2012 DE 102012013221
(62) Teilanmeldung aus: 13002150.4
(71) Anmelder: MAN Truck & Bus AG, 80995 München (DE)
(72) Erfinder: Döring, Andreas, 82008 München (DE); Rothe, Dieter, 90403 Nürnberg (DE)

(57) **Zusammenfassung**

Die Erfindung betrifft ein Abgasnachbehandlungssystem mit einem Katalysator (9) und/oder mit einer anderen Abgasnachbehandlungseinheit für den Einsatz im Abgasstrom von Brennkraftmaschinen, wobei wenigstens ein temperaturempfindliches Element (2 bis 4, 8) zur Überprüfung einer Überschreitung von zumindest einer Temperaturgrenze, welches wenigstens teilweise aus temperaturempfindlichem Material besteht, an wenigstens einem hinsichtlich auftretender Temperaturen zu überwachenden Bereich der Abgasnachbehandlungseinheit vorgesehen ist, und dass das temperaturempfindliche Material bei wenigstens einer vorgegebenen Grenztemperatur seine Eigenschaft dauerhaft sichtbar oder in anderer Weise detektierbar ändert. Erfindungsgemäß ist das temperaturempfindliche Material temperaturabhängig farbveränderlich.

## Beschreibung

Die Erfindung betrifft ein Abgasnachbehandlungssystem mit einem Katalysator und/oder mit einer anderen Abgasnachbehandlungseinheit für den Einsatz im Abgasstrom von Brennkraftmaschinen.

Zur Reduzierung der Emissionen von Brennkraftmaschinen, insbesondere von Verbrennungsmotoren in Kraftfahrzeugen, werden Abgasnachbehandlungssysteme eingesetzt, die Partikelfilter und/oder Katalysatoren als Abgasnachbehandlungseinheiten verwenden. Diese Abgasnachbehandlungseinheiten haben einen temperaturabhängigen Wirkungsgrad und können bei zu hohen Betriebstemperaturen auch irreversibel beschädigt oder auch vollständig unbrauchbar werden.

Bei einem Partikelfilter kann beispielsweise eine Rußoxidation optimal bei ca. 370° C ablaufen. Liegen dagegen die Betriebstemperaturen unterhalb von 230° C kann keine sichere Funktion des Partikelfilters sichergestellt werden. Dies kann bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auftreten. Durch die Zugabe von Kohlenwasserstoffen kann hier eine gezielte Temperaturerhöhung vorgenommen werden, um in einen optimalen Betriebstemperaturbereich zu gelangen.

Grundsätzlich besteht beim Betrieb der Abgasnachbehandlungseinheiten die Gefahr, dass beispielsweise durch exothermes Abbrennen des kohlenstoffhaltigen Rußes ein Temperaturanstieg bis auf 1000° C und damit eine Schädigung der Abgasnachbehandlungseinheit beziehungsweise nachgeschalteter Katalysatoren kommen kann. Auch der Einsatz von V₂O₅ als Aktivmaterial für einen SCR-Katalysator kann Probleme aufwerfen, wenn die Abgastemperatur am SCR-Katalysator über 650° C liegt, da V₂O₅ dann sublimiert. Bei derartigen Partikelfiltern mit V₂O₅ als Aktivmaterial können unkontrollierte Temperaturspitzen auftreten und den Partikelfilter schädigen.

Prinzipiell kann festgehalten werden, dass, insbesondere bei einer katalytischen Beschichtung des Partikelfilters darauf geachtet werden muss, dass bestimmte maximale Temperaturen nicht überschritten werden.

Neben Kohlenstoff sammelt sich auch Asche an, die bei der Verbrennung von Motoröl und/oder Kraftstoff, hier speziell sogenannter Biokraftstoffe, im Partikelfilter anfällt. Daher muss dieser turnusmäßig aus dem Fahrzeug ausgebaut und gereinigt werden. Dies läuft üblicherweise so ab, dass nach dem Ausbau der Filter in einem Ofen ausgebrannt wird, um eventuell noch enthaltenen Russ zu entfernen. Anschließend wird die Asche mit Hilfe von Druckluft ausgeblasen oder mit Hilfe von Wasser ausgewaschen.

Da die Reinigung sehr zeitintensiv ist und erhebliche Investitionen in die Reinigungseinrichtungen voraussetzt, werden die Filter oft nicht sofort gereinigt, sondern gegen einen zweiten Filter getauscht. Die ausgebauten Filter werden meist zentral gesammelt, gereinigt und als Tauschfilter dem Kreislauf wieder zur Verfügung gestellt.

Allerdings besteht dabei das Problem, dass bevor der Filter wieder in den Kreislauf eingeschleust werden kann, eine aufwändige Analyse des Filters, speziell auf zu hohe Betriebstemperaturen, die zu einer Beschädigung des Filters und/oder darauf aufgebrachter katalytischer Beschichtungen geführt haben können, erfolgen muss. Um Risse innerhalb des Filters, die durch zu hohe Temperaturspannungen entstanden sind, erkennen zu können, wird zum Beispiel Röntgen oder Computertomographie angewendet. Um zu überprüfen, ob die katalytische Beschichtung beschädigt ist, sind aufwändige Messungen, insbesondere Aktivitätsmessungen mit Hilfe von Modellgasanlagen, notwendig.

Aus der EP 1 560 009A1 ist ein Temperaturindikator für die Anwendung im Lebensmittelbereich bekannt, der insbesondere zur Überwachung der "Kühlkette" dient.

Es ist Aufgabe der Erfindung, ein Abgasnachbehandlungssystem anzugeben, das eine einfache Möglichkeit bietet, Beschädigungen durch aufgetretene zu hohe Betriebstemperaturen an einem Partikelfilter oder Katalysator erkennen zu können.

Gelöst wird die Aufgabe durch ein Abgasnachbehandlungssystem mit den Merkmalen des Patentanspruches 1. Besonders vorteilhafte Weiterbildungen des Abgasnachbehandlungssystems sind in den Unteransprüchen offenbart.

Gemäß Patentanspruch 1 ist bei dem Abgasnachbehandlungssystem erfindungsgemäß vorgesehen, dass wenigstens ein temperaturempfindliches Element, welches wenigstens teilweise aus temperaturempfindlichem Material besteht, an wenigstens einem hinsichtlich auftretender Temperaturen zu überwachenden Bereich der Abgasnachbehandlungseinheit angebracht ist, und dass das temperaturempfindliche Material bei wenigstens einer vorgegebenen Grenztemperatur seine Eigenschaft dauerhaft sichtbar oder in anderer Weise detektierbar ändert. Das temperaturempfindliche Material kann beispielsweise temperaturabhängig farbveränderlich sein oder beispielsweise bei bestimmten Temperaturen verdampfen oder beispielsweise temperaturabhängig seine magnetischen Eigenschaften ändern. Wesentlich ist dabei, dass die detektierbaren Änderungen am temperaturempfindlichen Material dauerhaft sind, damit zu einem beliebigen späteren Zeitpunkt geprüft werden kann, ob eine oder gegebenenfalls auch mehrere vorgegebene Temperaturgrenzen überschritten wurden. Das jeweilige temperaturempfindliche Element kann aus mehreren Materialkomponenten bestehen, so dass beispielsweise eine Materialkomponente einen niedrigeren Temperaturgrenzwert und die andere Materialkomponente einen höheren Temperaturgrenzwert durch eine Materialveränderung anzeigen kann.

Das temperaturempfindliche Material kann auch direkt auf das Substrat eines Katalysators und/oder Partikelfilters aufgebracht sein. Es besteht aber auch die Möglichkeit, das temperaturempfindliche Material auf ein mit dem Substrat vorzugsweise unlösbar verbundenes Bauteil aufzubringen. Die unlösbare Anbringung des Materials ist deshalb bevorzugt, weil dadurch sichergestellt werden kann, dass keine unerlaubten nachträglichen Manipulationen vorgenommen werden können.

Weiterhin kann vorgesehen sein, dass an der Abgasnachbehandlungseinheit ein Detektor angebracht ist, der eine durch Überschreiten einer Grenztemperatur aufgetretene Materialveränderung an dem temperaturempfindlichen Material erkennt und gegebenenfalls auswertet. Mit einem solchen Detektor kann während des Betriebs ständig eine Überwachung von gegebenenfalls auftretenden Grenztemperaturen durchgeführt werden.

Stromab der Abgasnachbehandlungseinheit und/oder an der Abgasnachbehandlungseinheit kann in Strömungsrichtung des Abgasstroms ausgangsseitig ein Detektor angeordnet sein, der eine aufgetretene Änderung des temperaturempfindlichen Materials anzeigt. Dieser Detektor kann grundsätzlich aber auch durch einen unabhängig von der Abgasnachbehandlungseinheit handhabbaren Detektor gebildet sein, mittels dem zum Beispiel im ausgebauten Zustand der Abgasnachbehandlungseinheit oder im ausgebauten Zustand einer entsprechenden Komponente der Abgasnachbehandlungseinheit eine aufgetretene Änderung detektiert wird. Ein solcher Detektor kann beispielsweise eine chemische Reaktion mit einem beim Überschreiten einer Grenztemperatur verdampften temperaturempfindlichen Material eingehen. Eine solche detektierbare Änderung kann beispielsweise eine Farbänderung oder eine Änderung der magnetischen Eigenschaft sein. Diese Maßnahme ermöglicht es, einen Bereich eines Partikelfilters oder einer sonstigen Abgasnachbehandlungseinrichtung zu überwachen, der von außen nicht einsehbar oder zugänglich ist. Der verdeckt angeordnete Bereich ist mit temperaturempfindlichen Material versehen, welches dann zu einer Reaktion an einem von außen sichtbaren oder lösbaren Indikator führt, wenn eine bestimmte Temperaturgrenze an dem zu überwachenden Bereich überschritten wurde.

Am Indikator kann ein Detektor eine Farbänderung oder eine Änderung magnetischer Eigenschaften überwachen und gegebenenfalls anzeigen. Das heißt der Indikator kann grundsätzlich auch bereits selbst den Detektor ausbilden und umgekehrt.

Eine besonders vorteilhafte Weiterbildung der Erfindung sieht die Verwendung eines temperaturempfindlichen Materials zur Darstellung eines Barcodes, 2D-Codes oder eines sonstigen, von einer Leseeinrichtung lesbaren Codes vor, der in einem zu überwachenden Bereich einer Abgasnachbehandlungseinheit angebracht ist. Der Code kann dabei so ausgebildet sein, dass die darin enthaltene Information beziehungsweise Codierung sich temperaturabhängig ändert, vorzugsweise beim Überschreiten von vorgegebenen Grenztemperaturen. Das hierfür verwendete temperaturempfindliche Material kann beim Überschreiten bestimmter Grenztemperaturen seine Farbe oder seine sonstige Beschaffenheit ändern, so dass dies zu einer entsprechenden Änderung des dargestellten Codes führt.

Eine weitere Möglichkeit besteht darin, nicht das Vorhandensein des temperaturempfindlichen Elements zu überprüfen, sondern dessen chemische Zusammensetzung. Hierbei läuft ab einer bestimmten Temperatur innerhalb des Elements, das Informationen über die Temperaturhistorie enthält bzw. anzeigt, eine chemische Reaktion ab, die zu einer Veränderung der chemischen Zusammensetzung führt. Eine einfache Möglichkeit diese geänderte Zusammensetzung feststellen zu können, besteht darin, chemische Verbindungen zu wählen, die eine Farbveränderung des Elements zur Folge haben. In der WO 2007036538A2 ist ein Verfahren beschrieben, das diese Farbänderung mit Hilfe von Nanokugeln und verschieden farbigen Pigmenten beschreibt.

Zu diesem Zweck können unterschiedliche Thermofarben verwendet werden. Die verwendeten Farbpigmente können zum Beispiel Chromoxid (Cr₂O₃) oder Eisenoxid, etc. enthalten.

Selbstverständlich ist die Verwendung von Nanokugeln nicht zwingend notwendig, verbessert allerdings in Kombination mit den oben beschriebenen, sogenannten Thermo- oder Thermochromfarben, die Genauigkeit der Temperaturbestimmung.

Bei den in Fahrzeugen eingesetzten Partikelfiltern handelt es sich meist um Sintermetallfilter oder keramische Substrate, wie Cordierit, Siliziumcarbid oder Aluminiumtitanat. Allen Filtern ist gemein, dass mit Hilfe eines metallischen Mantels, der das Substrat wenigstens bereichsweise umschließt oder im Fall eines Sintermetallsubstrat mit diesem verschweißt oder verlötet ist, diese im Abgastrakt fixiert werden. Im Fall von keramischen Substraten ist zwischen Mantel und Substrat zusätzlich eine Lager- oder Quellmatte angebracht, um die unterschiedlichen Temperaturausdehnungskoeffizienten der Keramik und des diese umgebenden metallischen Mantels ausgleichen zu können.

Im einfachsten Fall wird dieser Mantel mit einem Element aus einem temperaturempfindlichen Material versehen, das sich bei einer bestimmten Temperatur, ab der eine Beschädigung des Substrats oder des auf diesem eventuell aufgebrachten Katalysators auftritt, zersetzt, verdampft oder schmilzt.

Als temperaturempfindliches Material kann verwendet werden:
- Aluminium (Schmelzpunkt 660°C)
- Titan (Zersetzung durch Oxidation ab 880°C)
- Kupfer (Schmelztemperatur 1084°C)
- Kupferlegierungen (Schmelztemperatur abhängig von der Zusammensetzung)
   o Zinnbronze: bis zu 40% Zinn, üblicherweise ca. 8% Zinn,
   o Aluminiumbronze: 5-12 % Aluminium, 3,5-7 % Eisen
   o Bleibronze: bis zu 28 % Blei
   o Manganbronze: ca. 12 % Mangan
   o Siliziumbronze: 1-2 % Silizium
   o Berylliumkupfer (Berylliumbronze): ca. 2 % Beryllium
   o Phosphorbronze: ca. 7 % Zinn, ca. 0,5% Phosphor
   o Rotguss: Zinn, Zink, Blei (gesamt 10-20 %)
   o Konstantan: bis zu 45% Nickel

Wird der Partikelfilter zur Reinigung ausgebaut, kann aus dem Fehlen oder dem Vorhandensein dieses Elements auf den Zustand des Filters und/oder seiner katalytischen Beschichtung geschlossen werden.

Bei dem Element kann es sich zum Beispiel um wenigstens einen Niet, der im Mantel und/oder bei Sintermetallfiltern im Filter fixiert ist, handeln. Der Werkstoff des Niet unterscheidet sich vom Werkstoff des Mantels und/oder des Filters.

Die Verwendung magnetischer Werkstoffe für das Element, das Informationen über die Temperaturhistorie enthält beziehungsweise anzeigt, stellt eine weitere Möglichkeit dar: Dabei ist das Material so zu wählen, dass es seine Magnetisierung, die es vor dem Verbau in den Abgastrakt aufgeprägt bekam (Permanentmagnet), ab der gewünschten Temperatur verliert. Die Stärke des Magnetfelds des Element kann anschließend mit Hilfe von geeigneten Detektoren und daraus das Überschreiten einer festgelegten Temperatur bestimmt werden. Die Temperatur, bei der ein ferromagnetischer Stoff seine Magnetisierung verliert, wird als Curie-Temperatur bezeichnet und ergibt sich für
- Kobalt zu 1395°C,
- Eisen zu 1033°C,
- Nickel zu 627°C,
- Aluminium-Nickel-Kobalt-Legierungen zu ca. 550°C,
- Neodym-Eisen-Bor zu 60-200°C,
- Nickel zu 360°C,
- Ferrite zu 100-460°C.

Außer den oben aufgeführten Materialen können auch Stahl und Bismut-Mangan-Legierungen eingesetzt werden.

Selbstverständlich können bei allen oben beschriebenen Varianten auch mehrere, insbesondere unterschiedliche, temperaturempfindliche Elemente, die die Informationen über die Temperaturhistorie enthalten beziehungsweise anzeigen, auf dem Partikelfilter und/oder auf Bauteilen, die nicht zerstörungsfrei von diesem getrennt werden können, angebracht werden.

Zum einen bietet sich durch die Verwendung unterschiedlicher Elemente die Möglichkeit, diese so auszulegen, dass unterschiedliche Temperaturen erkannt werden können.

Eine weitere Möglichkeit besteht darin, sowohl am Filterein- als auch am Filteraustritt Elemente, die Informationen über die Temperaturhistorie enthalten beziehungsweise anzeigen, anzubringen. Dahinter steckt der Gedanke, dass die maximalen Temperaturen während einer unkontrollierten Partikelfilterregeneration, die während des Betriebs der Brennkraftmaschine auftritt, auf Grund der Abgasströmung am Filteraustritt auftreten. Beim Ausbau sollten sich dann Unterschiede zwischen dem am Eintritt und dem am Austritt angebrachten Element feststellen lassen.

Demgegenüber bestehen auf Grund der fehlenden Gasströmung keine Unterschiede, wenn der Filter nach seinem Ausbau in einem Ofen unsachgemäß, sprich bei zu hohen Temperaturen, ausgeheizt wurde. So kann auf einfache Weise die Schadensursache eingegrenzt werden.

Bei Verwendung von Farbindikatoren können größere Bereiche des Substrats und/oder Mantels mit den Thermofarben versehen werden, wodurch eine sehr genaue Lokalisierung von hohen Temperaturen dargestellt werden kann. Dabei hat es sich als sinnvoll erwiesen, mindestens 15% der Länge und/oder 10% des Umfangs und/oder 5% der Stirnfläche des Substrats und/oder des dieses umgebenden Mantels mit Thermofarbe zu versehen.

So sind beispielsweise auch andere Komponenten zur Abgasnachbehandlung auf diese Weise auf zu hohe Temperaturen überwachbar. Dazu zählen unter anderem Katalysatoren zur Oxidation von NO, NOx-Speicherkatalysatoren, speziell wenn sie mit Hilfe von hohen Temperaturen desulfatisiert werden müssen, Dreiwegekatalysatoren, Methanoxidationskatalysatoren, Otto-Oxidationskatalysatoren, Otto-Partikelfilter sowie SCR-Katalysatoren. Die Überwachung ist speziell stromab von Partikelfiltern angebrachten Katalysatoren sinnvoll, da hier, insbesondere bei unkontrollierten Regenerationen hohe Temperaturen auftreten können.

Die Katalysatoren und/oder Partikelfilter können in einen Abgasschalldämpfer integriert sein. Sind die Katalysatoren und/oder Partikelfilter nicht zerstörungsfrei vom Schalldämpfer zu lösen, kann das Element zur Temperaturüberwachung an und/oder auf diesem Schalldämpfer aufgebracht sein.

In besonderem Maße hat sich allerdings die Anbringung von temperaturempfindlichem Material zur Überwachung der Temperatur auf den Stirnseiten, also der An- und/oder Abströmfläche, der Komponenten zur Abgasnachbehandlung, also den Katalysatoren und/oder Partikelfiltern, bewährt. Da Wärmeübergänge auf andere Teile an dieser Position zu vernachlässigen sind, gelingt eine besonders genaue Bestimmung der Substrattemperatur beziehungsweise Katalysatortemperatur. Für diesen Einsatz bieten sich in besonderem Maße temperaturempfindliche Farben an, die durch Aufdrucken, Aufsprühen oder Tränken aufgebracht werden können.

Dabei ist es auch möglich, die Farben beziehungsweise Stoffe so auszuwählen, dass sie ab einer bestimmten Temperatur eine chemische Reaktion mit dem Filter- oder Katalysatorsubstrat oder dem eigentlichen Katalysator eine chemische Reaktion eingehen, die zu einer Verfärbung führt.

Prinzipiell kann bei der Verwendung von Farben und/oder Pigmenten eine, zumindest teilweise, Verschlüsselung von Informationen und/oder eine eindeutige Identifikation durch das Mischen von unterschiedlichen Pigmenten erfolgen. Durch eine spektrale Analyse und Abgleich mit einer Datenbank gelingt eine genaue Zuordnung beziehungsweise Entschlüsselung. Hierfür können auch fluoreszierende Pigmente, speziell aus Seltenerdelementen, verwendet werden.

Die Temperaturüberwachung eines Katalysators beziehungsweise eines sonstigen Bauelements des Abgasnachbehandlungssystems kann mit Hilfe der Entmagnetisierung von permanentmagnetischem Material so erfolgen, dass die Ausrichtung und/oder die Stärke des Magnetfelds im Frischzustand des Bauelements dokumentiert wird und die während der Überprüfung ermittelten Werte mit diesen dokumentierten verglichen werden. Dabei können unterschiedliche Bereiche des Bauelements auch unterschiedlich magnetisiert werden.

Außerdem kann vorgesehen sein, dass sich die Magnetisierung im Frischzustand entlang des Querschnitts des Bauelements ändert.

Das Bauelement kann zumindest teilweise metallische Folien enthalten, die während der Produktion des Bauelements magnetisiert werden.

Es besteht außerdem die Möglichkeit, dass ein Temperaturindikator bereits während der Produktion des Katalysators dem Katalysatorgrundmaterial zugegeben wird.

Die Erfindung wird nachfolgend anhand von in der Zeichnung dargestellten Ausführungsbeispielen näher erläutert.

Es zeigen:
- Fig. 1: einen Wabenkörper eines Katalysators mit auf dem Substrat aufgebrachtem temperaturempfindlichen Elementen,
- Fig. 2: einen aus temperaturempfindlichem Material dargestellten Barcode,
- Fig. 3: eine vereinfachte Seitenansicht eines in einen Abgasstrom einer Brennkraftmaschine eingesetzten Katalysators,
- Fig. 4: eine Seitenansicht eines in einen Abgasstrom einer Brennkraftmaschine eingesetzten Katalysators mit magnetisiertem Material und mit einem Hall-Sensor als Detektor,
- Fig. 5: eine Ansicht der Stirnseite eines Katalysatorsubstrats mit homogener Magnetisierungsrichtung,
- Fig. 6: eine Ansicht der Stirnseite eines Katalysatorsubstrats mit homogener Magnetisierungsrichtung und einem auf Grund von Übertemperatur entmagnetisierten Bereich,
- Fig. 7: eine Ansicht der Stirnseite eines Katalysatorsubstrats mit Bereichen unterschiedlicher Magnetisierungsrichtungen und
- Fig. 8: eine Seitenansicht eines in einen Abgasstrom einer Brennkraftmaschine eingesetzten Katalysators mit mehreren magnetisierten Bereichen entlang der Strömungsrichtung.

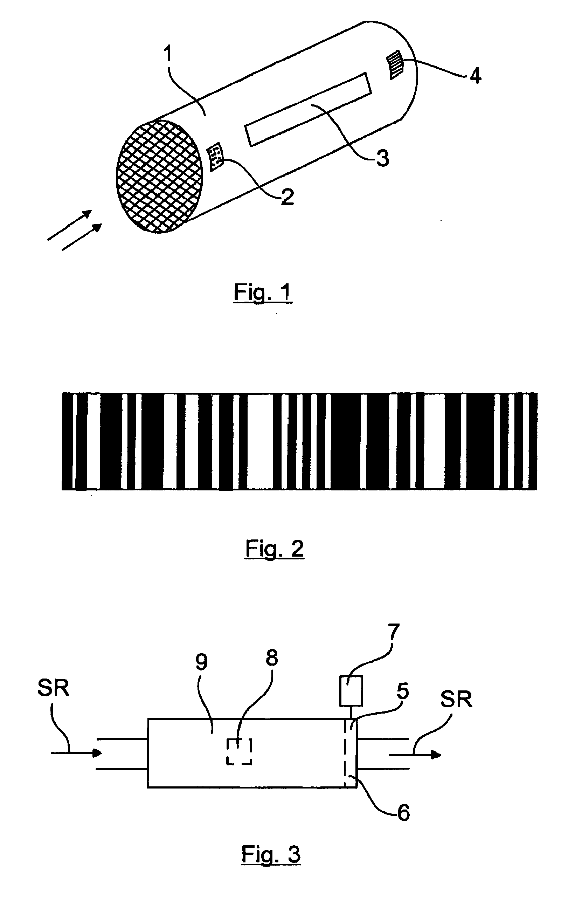

Der in Figur 1 dargestellte Wabenkörper 1 eines Katalysators wird in Pfeilrichtung von dem zu reinigenden Abgas durchströmt, wobei aufgrund ablaufender chemischer Reaktionen hohe Betriebstemperaturen im Wabenkörper 1 auftreten können. Das Grundmaterial des Wabenkörpers 1 besteht aus Keramik und kann auch als Substrat 11 bezeichnet werden, an dessen Umfangsfläche an drei Bereichen temperaturempfindliche Elemente 2, 3, 4 aus unterschiedlichen temperaturempfindlichen Materialien beispielhaft aufgebracht sind. Im mittleren Bereich ist das temperaturempfindliche Element 3 als langgestreckter Streifen auf den Wabenkörper 1 aufgebracht, wodurch eine Temperaturüberwachung über einen größeren Bereich möglich ist. Dieser kann aus Thermofarben, einem Strichcode, ab einer bestimmten Temperatur verdampfenden und/oder ab einer bestimmten Temperatur ihre magnetischen Eigenschaften verändernden Substanz bestehen. Im Eingangsbereich ist ein beispielsweise als 2D-Code aufgebrachtes temperaturempfindliches Element 2 aufgebracht, während im Endbereich das temperaturempfindliche Element 4 einen Barcode darstellt.

Die aufgebrachten temperaturempfindlichen Elemente 2, 3, 4 können für unterschiedliche Grenztemperaturen ihre Materialeigenschaft ändern, das heißt dass auftretende Materialänderungen auf die Überschreitung unterschiedlicher Grenztemperaturen hinweisen.

In Figur 2 ist ein Barcode beispielhaft dargestellt, dessen helle und dunkle Linien von unterschiedlichen temperaturempfindlichen Materialien gebildet werden können und auch über einen längeren Bereich, beispielsweise über nahezu die gesamte Länge eines Wabengrundkörpers eines Katalysators, angebracht sein können. Damit kann dann über die gesamte, mit temperaturempfindlichem Material versehene Fläche eine Temperaturüberwachung durch ein Auslesen der Barcodeinformation sehr einfach erfolgen.

In Figur 3 ist die Seitenansicht eines Katalysators 9 dargestellt, der vom Abgasstrom entsprechend der angegebenen Strömungsrichtung SR durchströmt wird. Am Ausgang 5 des Katalysators 9 ist ein mit unterbrochener Linie abgegrenzter Abschnitt als Indikator 6 ausgebildet, an dem beispielsweise eine auftretende Farbveränderung von einem Detektor 7 festgestellt werden kann. Am Indikator 6 kann eine Farbveränderung beispielsweise dadurch auftreten, dass ein im Katalysator 9 eingebrachtes temperaturempfindliches Element 8 bei Überschreiten einer Grenztemperatur verdampft ist und am Indikator 6 durch eine chemische Reaktion eine Farbveränderung hervorgerufen hat.

Als verdampfende Komponente kann beispielsweise Vanadiumoxid verwendet werden. Ab 650°C verdampft dieses und gelangt auf den Indikator 6. Um eine kräftige Farbe zu erhalten, bieten sich Bismutverbindungen, wie zum Beispiel Bismut(III)-oxid an, das nach folgender Gleichung mit V₂O₅ ein kräftiges, gelbes Farbpigment ausbildet:

Bi₂O₃ + V₂O₅ --> 2 BiVO₄

Die Veränderung des Indikators 6 lässt sich mit Hilfe eines Detektors 7 feststellen, wobei dieser an der Abgasnachbehandlungseinheit und/oder stromab der Abgasnachbehandlungseinheit angeordnet sein kann. Auch eine portable Ausführung des Detektors, beispielsweise für Werkstätten und Serviceniederlassungen, ist möglich. In diesem Fall wird der Detektor nur nach Bedarf eingesetzt und ermöglicht somit keine permanente Überwachung auf Überschreiten einer Grenztemperatur.

Ist die sich bildende und/oder die Indikatorverbindung thermisch weniger stabil als die verdampfende Verbindung, wird der Indikator 6 stromab des Substrats in einem kälteren Bereich des Abgassystems angebracht.

Ein weiterer Aspekt, den Indikator stromab des zu überwachenden Substrats als separates Bauteil auszuführen, besteht darin, diesen so auszuführen, dass er entfernt und außerhalb des Abgastrakts begutachtet werden kann. Da hierdurch eine deutlich bessere Befundung beziehungsweise leichtere Auswertung stattfinden kann, ist es möglich, je nach Detektierbarkeit der zu verdampfenden Komponente, auf eine chemische Reaktion der zu verdampfenden Komponente mit dem Indikator zu verzichten und stattdessen nur die Anlagerung des verdampften Stoffes an dem Indikator zu untersuchen. Im Fall von V₂O₅ kommt es hierbei zu einem blassgrünen Niederschlag, der optisch weniger auffällig ist, als das kräftig gelbe BiVO₄ und somit meist nur im ausgebauten Zustand zu erkennen ist. Durch Kühlung des Indikators gelingt eine Anhebung der abgeschiedenen Menge des verdampften Stoffes auf Grund von Thermophorese. Die Kühlung kann mit Hilfe eines Fluids, wie zum Beispiel Motorwasser, oder durch Verbesserung des Wärmeübergangs an die Umgebung, zum Beispiel durch Kühlrippen, erfolgen.

Neben einer optischen Auswertung ist selbstverständlich auch eine chemische Analyse des Indikators möglich. Dies ermöglicht neben der qualitativen Aussage auch eine Quantifizierung der verdampften Menge.

Das temperaturempfindliche Material kann zum Beispiel wenigstens eine der folgenden Verbindungen, insbesondere als Thermofarben, enthalten:
- Chromoxid (Cr₂O₃), eine isomorphe Mischung aus Kobaltzinkat (Rinnmanns grün, Co*ZnO),
- Chromoxid-Aluminium-Kobaltoxid (CrO₃-Al-CoO),
- Kobaltchromid (CoCr₂O₄),
- Kobalttitanat (Co₂TiO₄),
- Viktoria grün Granat (3CaO, Cr₂O₃, 3SiO₂) bzw. dessen Modifikationen durch Al₂O₃, B₂O₃, CaF₂, CoO oder ZrO₂,
- Kobaltaluminat (Tenatsblau, CoO*Al₂O₃),
- Kobaltstannat (CoO*SnO₂),
- Zirkonvanadin (Zirkonblau, (Zr,V)SiO₄),
- Kobaltzinkaluminat ((Co,Zn)Al₂O₄),
- Kobaltsilikat (Co₂SiO₄),
- Kobaltzinksilikat ((Co,Zn)SiO₄) sowie dessen Modifikation durch B₂O₃,
- Strontiumchromat (SrCrO₄),
- Chrom-Titangelb (Titanoxid mit Nickeloxid-Antimonoxid- Chromoxid ((Ti,Ni, Sb,Cr)O₂),
- Nickel-Barium-Titan-Priderit,
- Zinnvanadin ((Sn,V)O₂),
- Zirkonpraesodym ((Zr,Pr)SiO₄),
- Zirkonvanadin ((Zr,V)O₂),
- Nickel-Niob-Titangelb-Rutil ((Ti,Ni,Nb)O₂) und dessen Modifikation durch Cr₂Oθ₃ oder SrO,
- Chrom-Niob-Titan-Rutil ((Ti,Cr,Nb)O₂) und dessen Modifikation durch NiO oder SrO,
- Chrom-Wolfram-Titan-Rutil,
- Zinkchromat (ZnCrO₄),
- Aluminiumsilikat mit Eisenoxid,
- Eisenoxid (Fe₂O₃),
- Eisensilikat (FeO₃*SiO₂),
- Chromstannat (Cr₂ (SnO₃)₃),
- Zinkeisenoxid (ZnFe₂O₄),
- Goldaluminiumkorund (Al₂O₃ und Au) und dessen Modifikation durch Ag₂SiO₄ oder Ton,
- Chromaluminiumkorund ((Al,Cr)₂O₃) und dessen Modifikation durch ZnO,
- Manganaluminiumkorund ((Al,Mn)₂O₃) und dessen Modifikation durch P₂O₅,
- Zirkoneisensilikat ((Zr, Fe)SiO₄),
- Chromzinnsphen (CaO, SnO₂, SiO₂, Cr₂O₃) und dessen Modifikation durch B₂O₃ oder PbO,
- Chromaluminiumspinell (Zn(Al,Cr)₂O₄) und dessen Modifikation durch B₂O₃, Fe₂O₃, MgO oder PbO,
- Chromzinncassiterit ((Sn,Cr)O₃) und dessen Modifikation durch B₂O₃, Ca oder CePO₂,
- Kalziumaluminiumsilikat (Ca₃Al₂(SiO₄)₃),
- Amide,
- Amine und/oder,
- natriumausgetausche Zeolithe, insbesondere vom Typ FAU (1.25) - Naₓ-Na₈₅Al₈₅Si₁₀₇O₃₈₄.

Das temperaturempfindliche Material kann zum Beispiel wenigstens einen dieser Stoffe beziehungsweise Legierungen enthalten, die ab einer definierten Temperatur schmelzen oder verdampfen:
- Aluminium
- Titan
- Kupfer
- Vanadium
- Zinnbronze
- Aluminiumbronze
- Bleibronze
- Manganbronze
- Siliziumbronze
- Berylliumkupfer (Berylliumbronze)
- Phosphorbronze
- Rotguss
- Konstantan

Das temperaturempfindliche Material kann auch wenigstens teilweise als permanentmagnetisches Material ausgeführt sein, das ab einer bestimmten Temperatur seine Magnetisierung verliert. Dieses temperaturempfindliche Material besteht dabei wenigstens teilweise aus:
- Kobalt,
- Eisen,
- Nickel,
- Samarium
- Samarium-Kobalt
- Aluminium-Nickel-Kobalt-Legierungen,
- Neodym-Eisen-Bor,
- Nickel,
- Neodym,
- Ferrit,
- Heusler-Legierungen, insbesondere Co₂MnSi, Ni₂MnIn, Co₂CrGa, CoTiAl oder Cu₂MnAlStahl und/oder
- Bismut-Mangan-Legierungen

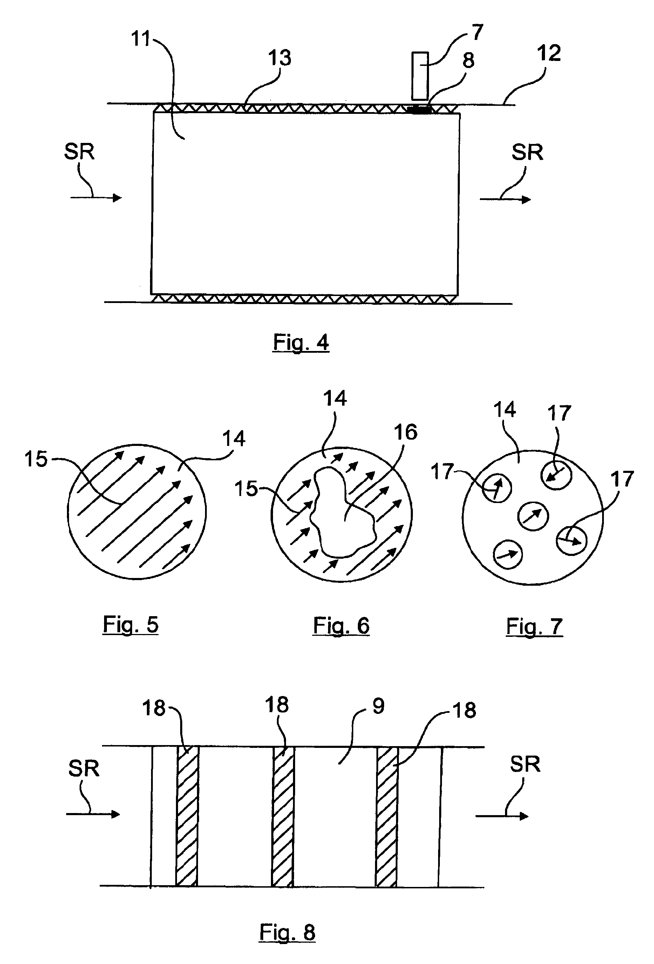

Das temperaturempfindliche magnetische Material 8 kann, wie in Figur 4 dargestellt, in Form einer Schicht auf das Substrat 11 und/oder den Mantel 12 des Katalysators 9 aufgebracht und über Sintervorgänge beziehungsweise Kalziniervorgänge auf diesem fixiert werden, oder kann auch als separates Bauteil ausgeführt sein. Im Fall des separaten Bauteils 8 ist es sinnvoll, dieses zwischen Substrat 11 und umgebenden Mantel 12 anzuordnen, wobei darauf zu achten ist, dass der Mantel 12 aus einem Material mit einer magnetischen Permeabilitätszahl von über 0,8 ausgeführt wird. Andernfalls würde das vom temperaturempfindlichen Bauteil ausgehende Magnetfeld zu stark geschwächt und von außen nicht mehr detektierbar sein. Demzufolge können für den Mantel 12 nur schwach diamagnetische, oder besser paramagnetische oder ferromagnetische Materialien eingesetzt werden. So haben sich zum Beispiel 1.4301, 1.4878 und 1.4841 als brauchbare Materialien erwiesen. Zwischen Substrat 11 und Mantel 12 ist eine Lagermatte 13 angeordnet, die gegebenenfalls auch mit magnetischem Material versehen sein kann.

Um eine Manipulation infolge einer Nachmagnetisierung zu verhindern, bietet es sich an, die Feldstärke und/oder die Ausrichtung des Magnetfelds im Frischzustand zu dokumentieren und gegebenenfalls elektronisch abzuspeichern. Beim Auslesen der Feldstärke und/oder der Ausrichtung des Magnetfelds nach oder während des Betriebs des Nachbehandlungssystems kann der ausgelesene Wert mit dem dokumentierten verglichen werden. Stimmen diese nicht überein, kann auf eine Manipulation beziehungsweise Beschädigung geschlossen werden. Insbesondere die Ausrichtung des Magnetfelds bietet sich als Marker für Manipulationen an.

Die Vermessung des Magnetfelds ist Stand der Technik und kann zum Beispiel mit Hilfe von Hall-Sensoren erfolgen.

Eine weitere Möglichkeit das permanentmagnetische Material auf das Substrat aufzubringen, besteht darin, es dem eigentlichen Katalysator- oder Substratgrundstoff zuzumischen und die Magnetisierung nach Fertigstellung der jeweiligen Komponenten aufzuprägen. Dies bietet sich beispielsweise bei der Verwendung von metallischen Katalysator- oder Filtersubstraten an. Werden diese aus ferromagnetischem Material, wie zum Beispiel ferritischem Edelstahl, hergestellt, kann dieses magnetisiert und anschließend dessen Magnetisierung zur Detektion einer Übertemperatur bestimmt werden.

Da metallische Katalysator- und Partikelfiltersubstrate aus einzelnen Folien aufgebaut sind, die gewellt und aufgerollt werden, bietet sich die Möglichkeit, vor und/oder während des Aufrollens, die Folien nur lokal zu magnetisieren. Dies bietet mehrere Vorteile: Zum einen können so Zonen mit unterschiedlicher Magnetisierung ausgebildet werden (Manipulationssicherheit), die Magnetisierung kann über den kompletten Querschnitt identisch oder auch variabel, insbesondere geringere Magnetisierung in den kälteren Randbereichen, ausgeführt werden, auf einen großen Magneten zur Magnetisierung des kompletten Bauteils kann verzichtet werden, die Magnetisierung und das Aufrollen können in einem Arbeitsschritt erfolgen und die Magnetisierung ist deutlich definierter.

Insbesondere bei der Detektion von Übertemperaturen in der Nähe der Stirnflächen bietet sich das Verfahren der Magnetisierung an. Fig. 5 zeigt die Magnetisierung einer Katalysatoraustrittsstirnfläche 14. Die Feldlinien 15 verlaufen parallel. Kommt es lokal zu einer Überhitzung, werden Teilbereiche 16 entmagnetisiert, wie dies in Fig. 6 dargestellt ist. Die Vermessung dieses Sachverhalts kann sehr einfach automatisiert, beispielsweise durch Kombination eines als Hall-Sensor ausgebildeten Detektors mit einer automatischen Traversiervorrichtung, erfolgen. Auch eine Quantifizierung ist möglich, was bei der Verwendung von Thermofarben im Abgas oft recht schwierig ist, da sich deren Farbe durch andere Abgasbestandteile, wie Ruß oder Schwefel verändern kann.

Die Feldlinien müssen nicht notgedrungen parallel verlaufen, sondern es kann aus Gründen der Manipulationssicherheit auch sinnvoll sein, einzelne Teilbereiche, wie in Figur 7 dargestellt, mit unterschiedlichen Ausrichtungen 17 des Magnetfelds auszubilden, deren Anordnung und Ausrichtung im Frischzustand zu dokumentieren und später mit dem gebrauchten Katalysator zu vergleichen. Die Anordnung der Teilbereiche kann alternativ oder zusätzlich auch mit beispielsweise Thermofarben und/oder Barcodes überwacht werden.

Die Zugabe von Material zur Temperaturüberwachung zum Katalysatorgrundstoff während der Produktion beschränkt sich nicht auf permanentmagnetische Materialien, wie zum Beispiel Eisen oder Kobalt, und bietet sich insbesondere auch bei Materialien an, die ein Überschreiten der Abgastemperatur durch Schmelzen oder Verdampfen anzeigen. Auch die Verwendung von katalytisch aktivem Material als Indikator ist denkbar, wie zum Beispiel Vanadiumoxid, dass eine hohe SCR-Aktivität aufweist. Weiter ist es auch denkbar, wenigstens eine katalytisch aktive Komponente nach deren Aufbringen als Katalysatorbeschichtung auf einen keramischen oder metallischen Träger bzw. einem Kalzinieren des Katalysators zu magnetisieren, so dass diese bei einer definierten Temperaturbeaufschlagung entmagnetisiert wird sowie gegebenenfalls verdampft und damit das temperaturempfindliche Element ausbildet. Als Beispiel seien hier eisen- oder kobalthaltige SCR-Katalysatoren auf Zeolithbasis genannt.

Figur 8 zeigt eine Seitenansicht eines in einen Abgasstrom einer Brennkraftmaschine eingesetzten Katalysators 9 mit mehreren magnetisierten Bereichen 18.

## Patentansprüche

1. Abgasnachbehandlungssystem mit einem Katalysator (9) und/oder mit einer anderen Abgasnachbehandlungseinheit für den Einsatz im Abgasstrom von Brennkraftmaschinen, wobei wenigstens ein temperaturempfindliches Element (2 bis 4, 8), welches wenigstens teilweise aus temperaturempfindlichem Material besteht, an wenigstens einem hinsichtlich auftretender Temperaturen zu überwachenden Bereich der Abgasnachbehandlungseinheit vorgesehen ist, und dass das temperaturempfindliche Material bei wenigstens einer vorgegebenen Grenztemperatur seine Eigenschaft dauerhaft sichtbar oder in anderer Weise detektierbar ändert, **dadurch gekennzeichnet, dass** das temperaturempfindliche Material temperaturabhängig farbveränderlich ist.

2. Abgasnachbehandlungssystem nach Anspruch 1, **dadurch gekennzeichnet, dass** das temperaturempfindliche Element (2 bis 4, 8) auf das Substrat (11) und/oder auf ein mit einem Substrat (11) lösbar oder unlösbar verbundenes Bauteil eines Katalysators (9) und/oder eines Partikelfilters aufgebracht ist und/oder Bestandteil eines Substrats ist und/oder dass das temperaturempfindliche Element durch wenigstens eine katalytisch aktive Komponente gebildet ist.

3. Abgasnachbehandlungssystem nach Anspruch 1 oder 2, **dadurch gekennzeichnet, dass** an der Abgasnachbehandlungseinheit und/oder stromab der Abgasnachbehandlungseinheit ein Detektor (7) angeordnet ist oder der Abgasnachbehandlungseinheit ein von dieser unabhängig handhabbarer Detektor zuordenbar ist, der eine aufgetretene Veränderung an dem temperaturempfindlichen Element (8) erkennt und/oder erfasst und/oder anzeigt, wobei bevorzugt vorgesehen ist,
a) dass in Strömungsrichtung des Abgasstroms am Ausgang (5) der Abgasnachbehandlungseinheit und/oder stromab der Abgasnachbehandlungseinheit ein eine aufgetretene Änderung des temperaturempfindlichen Elements (8) erkennender und/oder erfassender und/oder anzeigender Detektor (5) angeordnet ist,
und/oder
b) dass der Detektor (7) als eine Farbänderung am Indikator (6) erkennender Detektor ausgebildet ist.

4. Abgasnachbehandlungssystem nach einem der vorhergehenden Ansprüche, **dadurch gekennzeichnet, dass** ein verdampfendes temperaturempfindliches Element (8), insbesondere Vanadiumoxid, und/oder ein mit diesem reagierendes Material, insbesondere eine Bismutverbindung, des Indikators (6) so ausgewählt und aufeinander abgestimmt sind, dass sich bei einem Auftreffen und Reagieren des verdampften Materials mit dem Material des Indikators (6) am Indikator (6) eine gegenüber dem Indikator-Ausgangszustand deutlich andere Farbgebung einstellt, wobei bevorzugt vorgesehen ist, dass Vanadiumoxid und Bismut(III)oxid zu BiVO₄ reagieren.

5. Abgasnachbehandlungssystem nach einem der vorhergehenden Ansprüche, **dadurch gekennzeichnet, dass** das temperaturempfindliche Material wenigstens eine der folgenden Verbindungen als Thermofarben enthält:
- Chromoxid (Cr₂O₃), eine isomorphe Mischung aus Kobaltzinkat (Rinnmanns grün, Co*ZnO),
- Chromoxid-Aluminium-Kobaltoxid (CrO₃-Al-CoO),
- Kobaltchromid (CoCr₂O₄),
- Kobalttitanat (Co₂TiO₄),
- Viktoria grün Granat (3CaO, Cr₂O₃, 3SiO₂) bzw. dessen Modifikationen durch Al₂O₃, B₂O₃, CaF₂, Co0 oder ZrO₂,
- Kobaltaluminat (Tenatsblau, CoO*Al₂O₃),
- Kobaltstannat (CoO*SnO₂),
- Zirkonvanadin (Zirkonblau, (Zr,V)SiO₄),
- Kobaltzinkaluminat ((Co,Zn)Al₂O₄),
- Kobaltsilikat (Co₂SiO₄),
- Kobaltzinksilikat ((Co,Zn)SiO₄) sowie dessen Modifikation durch B₂O₃,
- Strontiumchromat (SrCrO₄),
- Chrom-Titangelb (Titanoxid mit Nickeloxid-Antimonoxid-Chromoxid ((Ti,Ni, Sb,Cr)O₂),
- Nickel-Barium-Titan-Priderit,
- Zinnvanadin ((Sn,V)O₂),
- Zirkonpraesodym ((Zr,Pr)SiO₄),
- Zirkonvanadin ((Zr,V)O₂),
- Nickel-Niob-Titangelb-Rutil ((Ti,Ni,Nb)O₂) und dessen Modifikation durch Cr₂Oθ₃ oder SrO,
- Chrom-Niob-Titan-Rutil ((Ti,Cr,Nb)O₂) und dessen Modifikation durch NiO oder SrO,
- Chrom-Wolfram-Titan-Rutil,
- Zinkchromat (ZnCrO₄),
- Aluminiumsilikat mit Eisenoxid,
- Eisenoxid (Fe₂O₃),
- Eisensilikat (Fe₂O₃*SiO₂),
- Chromstannat (Cr₂ (SnO₃)₃),
- Zinkeisenoxid (ZnFe₂O₄),
- Goldaluminiumkorund (Al₂O₃ und Au) und dessen Modifikation durch Ag₂SiO₄ oder Ton,
- Chromaluminiumkorund ((Al,Cr)₂O₃) und dessen Modifikation durch ZnO,
- Manganaluminiumkorund ((Al,Mn)₂O₃) und dessen Modifikation durch P₂O₅,
- Zirkoneisensilikat ((Zr, Fe)SiO₄),
- Chromzinnsphen (CaO, SnO₂, SiO₂, Cr₂O₃) und dessen Modifikation durch B₂O₃ oder PbO,
- Chromaluminiumspinell (Zn(Al,Cr)₂O₄) und dessen Modifikation durch B₂O₃, Fe₂O₃, MgO oder PbO,
- Chromzinncassiterit ((Sn,Cr)O₃) und dessen Modifikation durch B₂O₃, Ca oder CeO₂,
- Kalziumaluminiumsilikat (Ca₃Al₂(SiO₄)₃),
- Amide,
- Amine und/oder,
- natriumausgetausche Zeolithe, insbesondere vom Typ FAU (1.25)
- Naₓ-Na₈₅Al₈₅Si₁₀₇O₃₈₄.

6. Abgasnachbehandlungssystem nach einem der vorhergehenden Ansprüche, **dadurch gekennzeichnet, dass** das temperaturempfindliche Material wenigstens einen der nachfolgenden Stoffe beziehungsweise Legierungen enthält:
- Aluminium
- Titan
- Kupfer
- Vanadium
- Zinnbronze
- Aluminiumbronze
- Bleibronze
- Manganbronze
- Siliziumbronze
- Berylliumkupfer (Berylliumbronze)
- Phosphorbronze
- Rotguss
- Konstantan

7. Abgasnachbehandlungssystem nach einem der vorhergehenden Ansprüche, **dadurch gekennzeichnet, dass** das temperaturempfindliche Material Farbpigmente enthält, die von Nanokugeln umgeben sind und/oder die Nanokugeln aus Farbpigmenten bestehen und die Nanokugeln bei einer vorgegebenen Temperatur schmelzen.

8. Abgasnachbehandlungssystem nach einem der Ansprüche 2 - 5 **dadurch gekennzeichnet, dass** mindestens 15% der Länge und/oder 10% des Umfangs und/oder 5% der Stirnfläche des Substrats (11) und/oder des dieses umgebenden Mantels (12) mit dem temperaturempfindlichen Element versehen sind, welches bei Erreichen einer vorgegebenen Temperatur seine Farbe dauerhaft wechselt.

9. Abgasnachbehandlungssystem nach einem der vorhergehenden Ansprüche, **dadurch gekennzeichnet, dass** es sich bei den Abgasnachbehandlungseinheiten um Partikelfilter und/oder SCR-Katalysatoren und/oder NO-Oxidationskatalysatoren und/oder NOₓ-Speicherkatalysatoren und/oder um Otto-Partikelfilter und/oder 3-Wege-Katalysatoren und/oder Oxidationskatalysatoren und/oder SCR-Katalysatoren und/oder Methan-Oxidationskatalysatoren handelt.

10. Abgasnachbehandlungssystem nach einem der vorhergehenden Ansprüche, **dadurch gekennzeichnet, dass** das temperaturempfindliche Material auf mindestens einer Stirnseite (14) einer Abgasnachbehandlungseinheit oder deren Substrat (1) aufgebracht ist, und/oder dass das temperaturempfindliche Material fluoreszierende Farbe und/oder Farbpigmente enthält, und/oder dass das temperaturempfindliche Material mit dem Filtersubstrat und/oder dem Katalysatorsubstrat und/oder dem Katalysator (9) eine chemische Reaktion eingehen und sich dadurch ab einer bestimmten Temperatur eine irreversible Farbveränderung ergibt, und/oder dass das temperaturempfindliche Material durch Aufdrucken und/oder Aufsprühen und/oder Tränken auf die Komponenten zur Abgasnachbehandlung und/oder auf Bauteile, die nicht zerstörungsfrei von diesen getrennt werden können, aufgebracht ist, und/oder dass das temperaturempfindliche Material durch eine Mischung unterschiedlicher Farben und/oder Farbpigmente eine Verschlüsselung von Informationen und/oder eine eindeutige Zuordnung darstellt, die eine spektrale Analyse der Pigmente und ein anschleißender Abgleich mit einer Datenbank ermöglicht.

11. Abgasnachbehandlungssystem nach einem der vorhergehenden Ansprüche, **dadurch gekennzeichnet, dass** Farbe und/oder Farbpigmente des temperaturempfindlichen Materials Seltenerdelemente enthalten.

12. Abgasnachbehandlungssystem nach einem der vorhergehenden Ansprüche, **dadurch gekennzeichnet, dass** temperaturempfindliches Material in Komponenten des Abgasnachbehandlungssystems, insbesondere im Substrat (11) und/oder im Katalysatorgrundmaterial, integriert ist.
